(19) 

Europäisches
Patentamt
European
Patent Office
Office européen
des brevets

(11) **EP 4 529 049 A1**

(12) **EUROPEAN PATENT APPLICATION**
published in accordance with Art. 153(4) EPC

(43) Date of publication:
**26.03.2025 Bulletin 2025/13**

(21) Application number: **23807552.7**

(22) Date of filing: **12.05.2023**

(51) International Patent Classification (IPC):
**H04B 10/70** (2013.01)       **H04J 14/00** (2006.01)
**H04L 9/12** (2006.01)

(52) Cooperative Patent Classification (CPC):
**H04B 10/70; H04J 14/00; H04L 9/12**

(86) International application number:
**PCT/JP2023/017848**

(87) International publication number:
**WO 2023/223949 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.05.2022   JP 2022080318**

(71) Applicant: **Lquom, Inc.
Yokohama-shi, Kanagawa 240-0067 (JP)**

(72) Inventors:
• **YOSHIDA, Daisuke
  Yokohama-shi, Kanagawa 240-0067 (JP)**
• **NIIZEKI, Kazuya
  Yokohama-shi, Kanagawa 240-0067 (JP)**

(74) Representative: **Meissner Bolte Partnerschaft
mbB
Patentanwälte Rechtsanwälte
Postfach 86 06 24
81633 München (DE)**

(54) **SYSTEM IN WHICH QUANTUM ENTANGLEMENT IS SHARED**

(57)     Provided is a system in which quantum entanglement is efficiently shared. A system (100) in which quantum entanglement is shared includes: a first device (10); a plurality of second devices (20); and a multiplexing device, the first device outputting, to the quantum communication channel, photons multiplexed by a combination of a degree of freedom of time, a degree of freedom of frequency, and a degree of freedom of space, the multiplexing device carrying out a demultiplexing process by a combination of a degree of freedom of time, a degree of freedom of frequency, and a degree of freedom of space.

FIG. 1

EP 4 529 049 A1

## Description

Technical Field

The present invention relates to a system in which quantum entanglement is shared.

Background Art

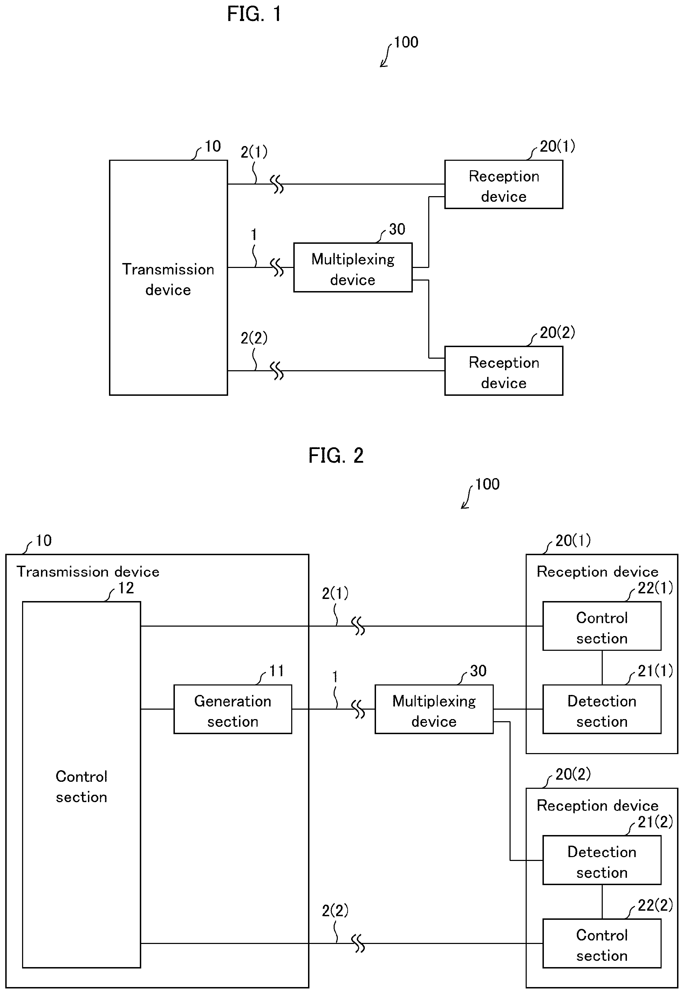

A quantum communication system which transmits and receives a signal with use of quanta is known. Patent Literature 1 discloses a multiplexed quantum communication system in which photons are multiplexed by optical wavelength-division multiplexing, and the multiplexed photons are transmitted and received (paragraph [0018], Fig. 1, and claim 9).

Citation List

[Patent Literature]

[Patent Literature 1]

Japanese Patent Application Publication, Tokukai, No. 2018-157405

Summary of Invention

Technical Problem

However, in the above multiplexed quantum communication system, the multiplexing is limited to optical wavelength-division multiplexing, and the efficiency of communications is not necessarily high.
It is an object of an aspect of the present invention to provide a system in which quantum entanglement is efficiently shared.

Solution to Problem

In order to attain the object, a system in accordance with an aspect of the present invention is a system in which quantum entanglement is shared, the system including: a first device; a plurality of second devices; a classical communication channel that connects the first device with each of the plurality of second devices; a multiplexing device connected to each of the plurality of second devices; and a quantum communication channel that connects the first device and the multiplexing device, wherein the first device outputs, to the quantum communication channel, photons multiplexed by a combination of a degree of freedom of time, a degree of freedom of frequency, and a degree of freedom of space, and the multiplexing device carries out a demultiplexing process by a combination of a degree of freedom of time, a degree of freedom of frequency, and a degree of freedom of space.

Advantageous Effects of Invention

According to an aspect of the present invention, it is possible to efficiently share quantum entanglement in a system in which quantum entanglement is shared.

Brief Description of Drawings

Fig. 1 is a schematic view illustrating a multiplexed quantum communication system in accordance with an embodiment of the present invention.
Fig. 2 is a schematic view illustrating a frequency-division-multiplexed state.
Fig. 3 is a schematic view illustrating a time-division-multiplexed state.
Fig. 4 is a schematic view illustrating a space-division-multiplexed state.
Fig. 5 is a schematic view illustrating a state in which frequency-division multiplexing, time-division multiplexing, and space-division multiplexing are combined.
Fig. 6 is a schematic view illustrating a more specific example of the multiplexed quantum communication system in accordance with the embodiment of the present invention.

Fig. 7 is a schematic view illustrating another more specific example of the multiplexed quantum communication system in accordance with the embodiment of the present invention.

Fig. 8 is a flowchart illustrating a procedure of generating an encryption key.

Description of Embodiments

The following description will discuss an embodiment of the present invention in detail. Fig. 1 is a view illustrating a device configuration of a multiplexed quantum communication system 100 in accordance with the embodiment.

The multiplexed quantum communication system 100 includes a quantum communication channel 1, classical communication channels 2(1) and 2(2), a transmission device 10, reception devices 20(1) and 20(2), and a multiplexing device 30. Quantum entanglement is shared between the transmission device 10 and the reception devices 20(1) and 20(2).

Hereinafter, the classical communication channels 2(1) and 2(2) will be referred to as classical communication channels 2 in a case where the classical communication channels 2(1) and 2(2) are collectively described, and the reception devices 20(1) and 20(2) will be referred to as reception devices 20 in a case where the reception devices 20(1) and 20(2) are collectively described.

The quantum communication channel 1 is an optical fiber through which a single photon is transmitted and received, and connects the transmission device 10 (first device) and the multiplexing device 30 to each other. Note that a plurality of quantum communication channels 1 may be arranged in parallel. This enables space-division multiplexing with use of the plurality of quantum communication channels 1, as described later. Note that the plurality of quantum communication channels 1 may be constituted by a single optical fiber instead of a plurality of optical fibers. In a case where the single optical fiber has a plurality of propagation modes, the single optical fiber is capable of functioning as the plurality of quantum communication channels 1.

The transmission device 10 (first device) generates a pair of photons corresponding to information sequentially, multiplexes one of the pair of photons, and transmits the one of the pair of photons to the multiplexing device 30 via the quantum communication channel 1 and ultimately to the reception devices 20.

The pair of photons is in a state of quantum entanglement, and in a case where a state of one of the pair of photons is determined, a state of the other of the pair of photons is determined correspondingly. The transmission device 10 transmits one of the pair of photons and retains the other of the pair of photons.

The transmission device 10 transmits photons (one of each pair of photons) which have been multiplexed by a combination of a degree of freedom of time, a degree of freedom of frequency, and a degree of freedom of space. That is, one photon out of each pair of photons, that is, respective one photons (i.e., a plurality of photons) of pairs of photons are multiplexed by a combination of a degree of freedom of time, a degree of freedom of frequency, and a degree of freedom of space.

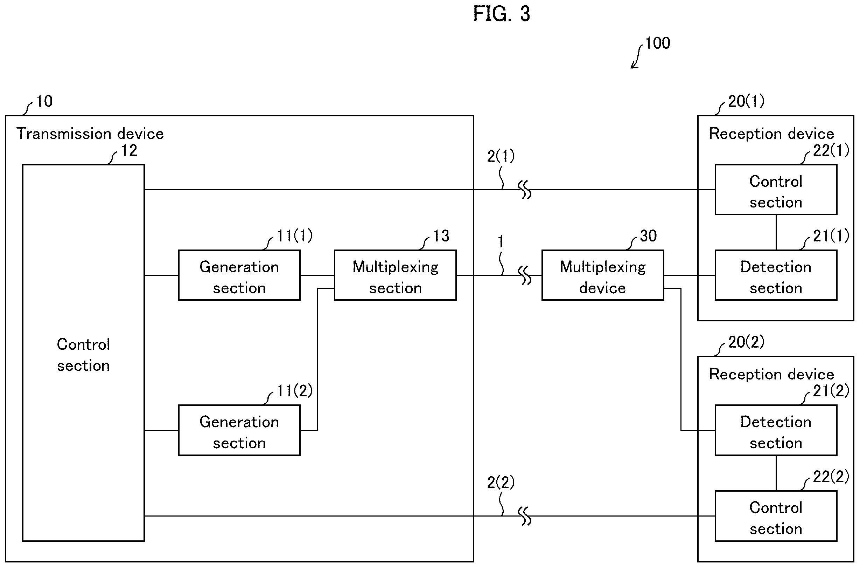

Figs. 2 to 4 are schematic views respectively illustrating frequency-division multiplexing, time-division multiplexing, and space-division multiplexing of photons.

In frequency-division multiplexing, respective ones (hereinafter referred to as "a plurality of photons") of pairs of photons are transmitted after being multiplexed so as to differ from each other in frequency (wavelength). The frequency range across which the multiplexing is carried out may be a wide frequency band of, for example, more than 100 [GHz].

In time-division multiplexing, a plurality of photons are arranged at narrow time intervals. For example, photons may be arranged at time intervals of less than 10 [ns] to form a time-division multiplexing band with a wide bandwidth of more than 100 [ns].

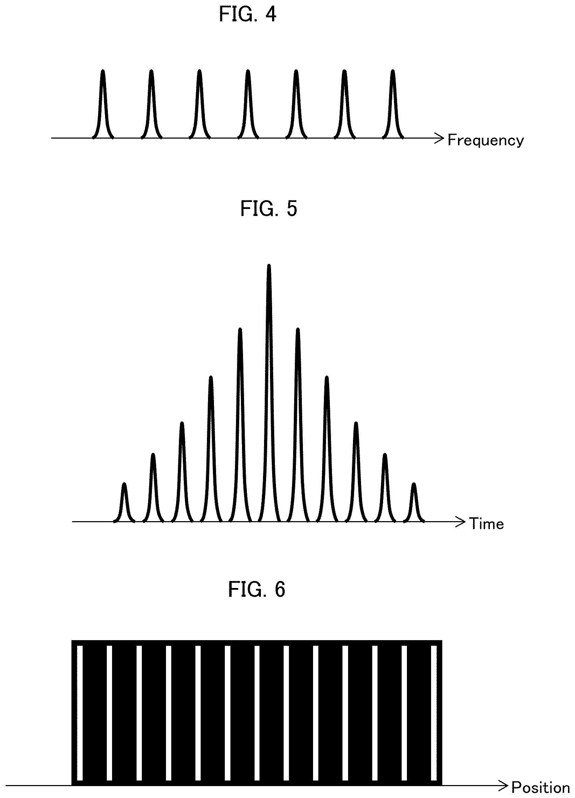

In Fig. 4, space-division multiplexing is represented as a state of being held at different positions in a quantum memory or the like. In a communication using space-division multiplexing, a plurality of quantum communication channels 1 (for example, a plurality of optical fibers arranged in parallel) may be used.

Fig. 5 is a schematic view illustrating a state in which frequency-division multiplexing, time-division multiplexing, and space-division multiplexing are combined. By combining a degree of freedom of time, a degree of freedom of frequency, and a degree of freedom of space, it is possible to transmit and receive information more efficiently. Here, a case is assumed in which the photons to be multiplexed are all equal in phase (e.g., $e^0 = 1$). In this case, a multiplicity (the number of modes) is represented as the number of squares inside the rectangular parallelepiped in Fig. 5. Note that, in a case where phase-division multiplexing is carried out in addition to frequency-division multiplexing, time-division multiplexing, and space-division multiplexing, the number of modes is significantly increased.

Frequency-division multiplexing, time-division multiplexing, and space-division multiplexing can be expressed by equations (1), (2), and (3) below.

$$\langle t, s | \phi \rangle_{freq} = |f_0\rangle + e^{iA_1}|f_1\rangle + e^{iA_2}|f_2\rangle + \cdots + e^{iA_l}|f_l\rangle \qquad \text{Equation (1)}$$

$|f_i\rangle$: **Frequency mode**
$A_i$ : **Phase of frequency mode**

$$\langle s, f | \phi \rangle_{time} = |t_0\rangle + e^{iB_1}|t_1\rangle + e^{iB_2}|t_2\rangle + \cdots + e^{iB_m}|t_m\rangle \qquad \textbf{Equation (2)}$$

$|t_j\rangle$ : **Time mode**
$B_j$ : **Phase of time mode**

$$\langle f, t | \phi \rangle_{space} = |s_0\rangle + e^{iC_1}|s_1\rangle + e^{iC_2}|s_2\rangle + \cdots + e^{iC_n}|s_n\rangle \qquad \textbf{Equation (3)}$$

$|s_k\rangle$: **Spatial mode**
$C_k$ : **Phase of spatial mode**

Further, a combination of frequency-division multiplexing, time-division multiplexing, and space-division multiplexing can be expressed by equation (4) below.

$$|\phi\rangle = \sum_{l,m,n} |f_l\rangle |t_m\rangle |s_n\rangle \times e^{iA_l + iB_m + iC_n} \qquad \textbf{Equation (4)}$$

That is, in the embodiment, a multiplexed quantum state achieved by a combination of a degree of freedom of time, a degree of freedom of frequency, and a degree of freedom of space is $|\varphi\rangle$ expressed by the multiplication in the right-hand side of equation (4). Note that the multiplexing need not be carried out in terms of all of time, frequency, and space. It is possible that any of time, frequency, and space is not used for the multiplexing.

The multiplexing device 30 receives multiplexed photons from the transmission device 10, carries out a demultiplexing process by a combination of a degree of freedom of time, a degree of freedom of frequency, and a degree of freedom of space, and transmits the photons thus demultiplexed to the reception devices 20(1) and 20(2).

The reception devices 20(1) and 20(2) (a plurality of second devices) each receive the demultiplexed photons and reproduce information transmitted from the transmission device 10.

Note that the transmission device 10 encrypts information with use of an encryption key (common key) and transmits the information as encrypted information, and the reception devices 20(1) and 20(2) each decrypt the received encrypted information with use of the encryption key (common key). To this end, a process for generating the encryption key is carried out between the transmission device 10 and the reception devices 20(1) and 20(2).

Through the classical communication channels 2(1) and 2(2), control information for generating the encryption key is transmitted and received. The control information is, for example, a sync signal for synchronization between the transmission device 10 and the reception devices 20, or the like. The classical communication channels 2 may each be realized by a wired channel such as an optical fiber, a wireless channel, or a combination of a wired channel and a wireless channel.

In the embodiment, for easy explanation, the device on a side from which the photons are transmitted is referred to as the transmission device 10, but the transmission device 10 may have a function of receiving photons. Likewise, the reception devices 20 may each have a function of transmitting photons.

[Examples of functional configuration]

Fig. 6 is a view illustrating an example of functional configurations of the transmission device 10 and the reception devices 20 in accordance with the embodiment. The transmission device 10 includes a generation section 11 and a control section 12. The reception device 20(1) includes a detection section 21(1) and a control section 22(1). The reception device 20(2) includes a detection section 21(2) and a control section 22(2).

The generation section 11 is a quantum light source which generates photons (a pair of photons) in a wavelength-division-multiplexed state. The quantum light source includes, for example, an optical crystal and a resonator. As described below, the combination of the optical crystal and the resonator makes it possible to generate photons having a respective plurality of wavelength modes (which are in a wavelength-division-multiplexed state).

The optical crystal has a high nonlinear optical constant (or a high effective nonlinear optical constant) and forms photons. Note here that the optical crystal is capable of generating, by spontaneous parametric down-conversion with forward propagation, a pair of photons which is in a state of quantum entanglement over a wider wavelength band than that of wavelengths used in communications. The resonator causes light to move back and forth inside the resonator to thereby limit (divide) the wide wavelength band into a plurality of wavelength modes (repeated structures). Thus, the combination of the optical crystal and the resonator makes it possible to generate photons which having a respective plurality of wavelength modes (which are in a wavelength-division-multiplexed state). Note that it is possible for a photon to not go back and forth (go around) in the resonator for a predetermined times.

Note here that the optical crystal may include a dispersion-compensating crystal or a birefringence phase difference-compensating crystal. Use of a dispersion-compensating crystal makes it possible to widen a wavelength band in which a peak of each wavelength mode is present and to increase the fidelity of a quantum state to a Bell state. By increasing the fidelity of the quantum state, it is possible to reduce the number of times of purification of entanglement and improve a communication rate.

The generation section 11 is not only capable of wavelength-division multiplexing (i.e., frequency-division multiplexing) but also time-division multiplexing and space-division multiplexing combined therewith. In addition to frequency-division multiplexing, for example, the generation section 11 may make a combined use of time-division multiplexing in which formation of a pulse train by mode-locking of the resonator of the generation section 11 is utilized. Further, in addition to wavelength-division multiplexing, it is possible to achieve space-division multiplexing by forming a high-order Hermite-Gaussian or Laguerre-Gaussian spatial mode with use of a transverse mode of the resonator.

The control section 12 controls an operation of the generation section 11. The control section 12 also carries out a process for generating an encryption key.

The detection sections 21 each detect photons outputted from the multiplexing device 30 and, for example, reproduce encrypted information by decoding a reception bit from a single photon on the basis of polarization.

Photons may be received (detected) by using, as each of the detection sections 21, a photon-detecting element such as an avalanche photodiode (APD). APD is a light-detecting element formed of, for example, indium gallium arsenide, silicon, germanium, or gallium nitride.

APD operates in an operation mode called a Geiger mode. In the Geiger mode, a reverse voltage of the APD is set to not less than a breakdown voltage, and a large pulse is generated in response to incidence of a received photon by the avalanche effect. This makes it possible to detect a single photon. The detection sections 21 each continuously carry out the operation of detecting a single photon by supply of a voltage which is in the form of a square wave or a sine wave and which consists of a voltage above the breakdown voltage and a voltage below the breakdown voltage.

The control sections 22 control the operations of the detection sections 21 to cause the detection sections 21 to output encrypted information, and reproduce pre-encryption information with use of the encryption key. The control sections 22 also carry out a process for generating an encryption key.

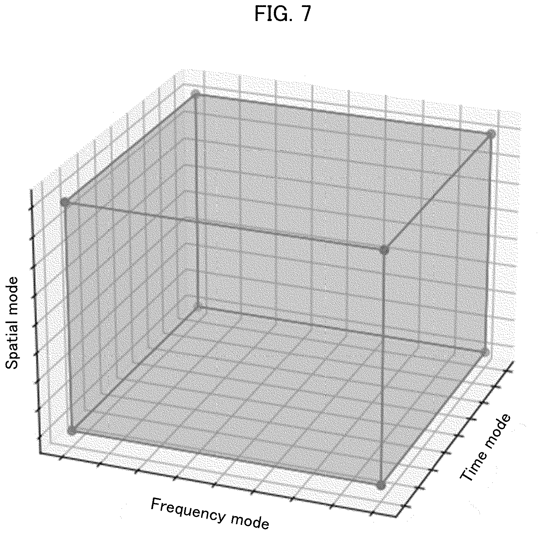

Fig. 7 is a view illustrating another example of functional configurations of the transmission device 10 and the reception devices 20 in accordance with the embodiment. The transmission device 10 includes generation sections 11(1) and 11(2), a control section 12, and a multiplexing section 13. The reception device 20(1) includes a detection section 21(1) and a control section 22(1). The reception device 20(2) includes a detection section 21(2) and a control section 22(2).

The generation sections 11(1) and 11(2) are a plurality of quantum light sources which are spatially arranged. As described above, each quantum light source may include, for example, an optical crystal and a resonator. In this example, for easy understanding, two generation sections 11 are indicated. It is possible, however, that three or more generation sections 11 are provided. Further, in this example, the number of the generation sections 11 is identical to the number of the reception devices 20. It is possible, however, that the numbers are different from each other.

Note here that for multiplexing of quanta (photons), phase relationships matter. That is, in a case where quanta to be multiplexed vary in phase, the variation works as noise and inhibits demultiplexing. By using quantum light sources having a pulsed correlation function, it is possible to cause photons to coincide with each other in phase relationship at places where the probability of existence of a photon is non-zero. Similarly, there is a Fourier transform relationship in which a pulse occurs at timing when the respective phases of frequencies coincide with each other. This can be realized by including the resonator in the quantum light source.

As to spatial modes, it is possible to cause the phases to coincide with each other by separately achieving interference with use of a laser.

The multiplexing section 13 carries out, with respect to respective light from the generation sections 11(1) and 11(2) (plurality of quantum light sources), a multiplexing process by a combination of a degree of freedom of time, a degree of freedom of frequency, and a degree of freedom of space. As described above, each of the generation sections 11 is not only capable of wavelength-division multiplexing (i.e., frequency-division multiplexing) but also time-division multiplexing and space-division multiplexing combined therewith. The addition of the multiplexing section 13 makes it possible to increase the multiplicity. Note here that it is possible to employ a configuration in which the single generation section 11 does not have multiplicity, and multiplexity is ensured by the multiplexing section 13 alone.

The multiplexing section 13 can include a combination of a frequency shifter, a delay device, and a distributor.

The frequency shifter causes a frequency shift such that respective photons from the generation sections 11(1) and 11(2) differ from each other in frequency. Examples of the frequency shifter include an acousto-optic modulator and an electro-optic modulator. A modulation frequency applied to the acousto-optic modulator can cause frequency-division multiplexing of light. Further, by applying a sawtooth wave to the electro-optic modulator, a high-speed shift of a frequency (wavelength) of light is possible. Note that when the light passes through the acousto-optic modulator, the light is subjected to diffraction dependent on the modulation frequency (a diffraction angle is formed). It is possible, however, to minimize the effect of the diffraction by causing the light to go back and forth in the acousto-optic modulator.

The delay device causes a delay such that respective photons from the generation sections 11(1) and 11(2) pass through the quantum communication channel 1 at respective different points in time. The delay device may be constituted by a combination of a beam splitter and a plurality of optical fibers which differ from each other in length. For example, the delay device may be constituted by (i) a beam splitter which divides light into two light beams at 50:50 and (ii) two optical fibers differing from each other in length. Note that a polarization beam splitter may be used as the beam splitter to divide light into two polarized light beams.

The delay device may be included in the multiplexing section 13 as part of a Mach-Zehnder interferometer or a Michelson interferometer. At this time, the Mach-Zehnder interferometer may be a multi-arm Mach-Zehnder interferometer in which a plurality of optical fibers differing in length are used.

The distributor causes respective photons from the generation sections 11(1) and 11(2) to be distributed to respective different quantum communication channels 1. The distributor is, for example, a switching mechanism which changes a connection destination, to which each of the generation sections 11(1) and 11(2) is connected, from one quantum communication channel 1 to another. Examples of the distributor include an optical switch and an acousto-optic modulator. The optical switch enables high-speed switching between quantum communication channels 1. The acousto-optic modulator is capable of switching between quantum communication channels 1 by causing a change in diffraction angle of light depending on the modulation frequency. Note that, as the optical switch, a lens may be caused to slightly turn to cause a change in direction of the light. Further, the distributor may be constituted by a combination of a frequency shifter (e.g., an acousto-optic modulator and an electro-optic modulator) and a spectrometer (e.g., a diffraction grating).

Note that the distributor (e.g., an optical switch) may be temporally synchronized with a pulse of pump light from each of the generation sections 11 (quantum light source). The pulse can be distributed by feedforward control.

Note here that the distributor can be constituted by connecting the generation section 11(1) to a quantum communication channel 1(1) and connecting the generation section 11(2) to a quantum communication channel 1(2) (fixed connection that does not involve switching of a connection destination).

The multiplexing section 13 may include more than one selected from the group consisting of the frequency shifter, the delay device, and the distributor, or may include all of the frequency shifter, the delay device, and the distributor. For example, the multiplexing section 13 can be constituted by a combination of the following (1) frequency shifter, (2) delay device, and (3) distributor.

(1) As a frequency shifter, a plurality of electro-optic modulators are used to generate a plurality of frequency modes to carry out frequency-division multiplexing. That is, to a respective plurality of electro-optic modulators, sine waves each of which has a voltage higher than a half-wavelength voltage and which differ from each other in frequency are applied to generate a plurality of frequency modes.

(2) As a delay device, a Mach-Zehnder interferometer with a plurality of arms is used to carry out time-division multiplexing. This allows time modes to be equivalently imparted to respective frequency-division-multiplexed frequency modes, without being affected by frequency. That is, it is possible to prevent decoherence caused by interference between frequency-division multiplexing and time-division multiplexing.

(3) As a distributor, a star coupler or a tree coupler is used to carry out space-division multiplexing. This allows spatial modes to be equivalently imparted to respective frequency-division-multiplexed frequency modes and respective time-division-multiplexed time modes, without being affected by frequency and time.

By thus combining (1) to (3), it is possible to carry out: multiplexing in terms of frequency, time, and space; prevent interference among frequency-division multiplexing, time-division multiplexing, and space-division multiplexing; and provide the multiplexing section 13 which is optical fiber-based and easy to assemble. Note that the multiplexing section 13 may be constituted by a combination of two selected as appropriate from the group consisting of (1) to (3), or may be constituted by only one selected from the group consisting of (1) to (3).

Note that the multiplexing section 13 may have a diffraction grating or a fiber Bragg grating to be able to carry out (i) division of a wavelength or (ii) an arithmetic operation for projecting a wavelength to a temporal axis.

[Quantum key generation process]

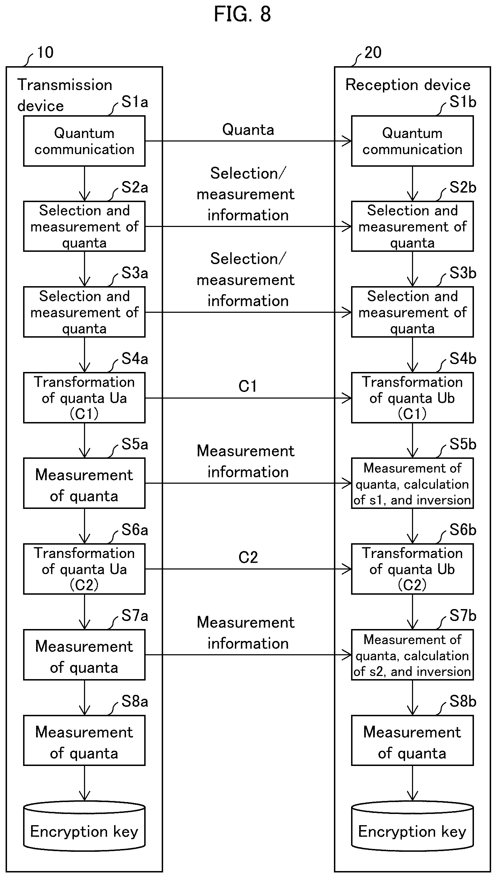

The following description will discuss an example of a secret key generation process in accordance with the embodiment. Fig. 8 is a view illustrating an example of the secret key generation process in accordance with the embodiment. The secret key generation process will be described below with reference to Figs. 8 and 1.

(1) Quantum communication (steps S1a and S1b)

The transmission device 10 transmits, to the reception devices 20 via the quantum communication channel 1 and the multiplexing device 30, one of a pair of photons which are in a state of quantum entanglement. N(1+2$\zeta$) photons are multiplexed and transmitted, demultiplexed by the multiplexing device 30, and received by the reception devices 20. As a result, the reception devices 20 each retain respective N(1+2$\zeta$) one photons (N(1+2$\zeta$) photons) of pairs of photons, and the transmission device 10 retains the respective other N(1+2$\zeta$) photons (N(1+2$\zeta$) photons) of the pairs of photons.

(2) Selection and measurement of quanta (step S2a)

The transmission device 10 randomly selects N$\zeta$ photons from the N(1+2$\zeta$) photons, measures the N$\zeta$ photons in an HV basis or a DA basis, and transmits a result of the measurement to the reception devices 20 via the classical communication channels 2. It is assumed here that the transmission device 10 carries out the measurement in an HV basis.

Note here that an HV basis and a DA basis are bases each corresponding to a polarization state of a photon. A horizontal (H) state, a vertical (V) state, a diagonal (D) state, and an anti-diagonal (A) state respectively mean a state of light linearly polarized in a horizontal direction, a state of light linearly polarized in a vertical direction, a state of light linearly polarized in a +45° diagonal direction, and a state of light linearly polarized in a -45° diagonal direction. The H state and the V state are orthogonal to each other, and the D state and the A state are orthogonal to each other.

(3) Selection and measurement of quanta (step S2b)

The reception devices 20 each selects, from the received N(1+2$\zeta$) photons, N$\zeta$ photons corresponding to the photons measured by the transmission device 10, and measures the N$\zeta$ photons in an HV basis. The reception devices 20 each compare a result of the measurement with the result of measurement carried out by the transmission device 10, to thereby calculate a percentage of errors. In a case where the percentage of errors is more than a predetermined value, the generation of an encryption key is canceled.

(4) Selection and measurement of quanta (step S3a)

The transmission device 10 randomly selects N$\zeta$ photons from the remaining N(1+$\zeta$) photons, measures the N$\zeta$ photons in a DA basis, and transmits a result of the measurement to the reception devices 20 via the classical communication channels 2.

(5) Selection and measurement of quanta (step S3b)

The reception devices 20 each measure N$\zeta$ corresponding photons with use of a DA basis. The reception devices 20 each compare a result of the measurement with the result of measurement carried out by the transmission device 10, to thereby calculate a percentage of errors. In a case where the percentage of errors is more than a predetermined value, the generation of an encryption key is canceled.

Thus, each of the transmission device 10 and the reception devices 20 retains N photons which have not been measured.

(5) Transformation of quanta (steps S4a and S4b)

The transmission device 10 determines an N×N non-singular binary matrix C1 and a map h1, and transmits the N×N non-singular binary matrix C1 and the map h1 to the reception devices 20 via the classical communication channels 2. The transmission device 10 subjects the N photons at the transmission device 10 to a unitary transformation Ua(C1). Each of the reception devices 20 subjects the N photons at the each of the reception devices 20 to a unitary transformation Ub(C1).

(6) Measurement of quanta (step S5a)

The transmission device 10 measures Kz photons (from an (N-Kz+1)-th photon to an N-th photon) in an HV basis, and transmits a Kz-bit sequence $z_A$ thus obtained to the reception devices 20 via the classical communication channels 2.

(7) Measurement of quanta, calculation of s1, and inversion (step S5b)

Each of the reception devices 20 measures Kz photons (from an (N-Kz+1)-th photon to an N-th photon) in an HV basis, and calculates s1 = $z_B$-$z_A$ from a Kz-bit sequence $z_B$ thus obtained and the result $z_A$ of the transmission device 10. Each of the reception devices 20 subjects (N-Kz) photons (from a first photon to an (N-Kz)-th photon) to an HV inversion with use of s1.

(8) Transformation of quanta (steps S6a and S6b)

The transmission device 10 selects an (N-Kz)×(N-Kz) non-singular binary matrix C2 and a map h2, and transmits the (N-Kz)×(N-Kz) non-singular binary matrix C2 and the map h2 to the reception devices 20 via the classical communication channels 2. The transmission device 10 subjects (N-Kz) photons to a unitary transformation UA(C2). Each of the reception devices 20 subjects the (N-Kz) photons (from the first photon to the (N-Kz)-th photon) to a unitary transformation UB(C2).

(9) Measurement of quanta (step S7a)

The transmission device 10 measures Kx photons (from an (N-Kz-Kx+1)-th photon to an (N-Kz)-th photon) in a DA rule, and transmits a Kx-bit sequence $x_A$ thus obtained to the reception devices 20 via the classical communication channels 2.

(10) Measurement of quanta, calculation of s2, and inversion (step S7b)

Each of the reception devices 20 measures Kx photons (from an (N-Kz-Kx+1)-th photon to the (N-Kz)-th photon) in a DA basis, and calculates s2 = $x_B$-$x_A$ from a Kx-bit sequence $x_B$ thus obtained and the result $x_A$ of the transmission device 10. Each of the reception devices 20 subjects (N-Kz-Kx) photons (from the first photon to an (N-Kz-Kx)-th photon) to a DA inversion with use of s2.

(11) Measurement of quanta (steps S8a and S8b)

The transmission device 10 measures the remaining photons in an HV basis and considers a bit sequence thus obtained to be the encryption key. Each of the reception devices 20 measures the remaining photons in an HV basis and considers a bit sequence thus obtained to be the encryption key.

The matters described above can be summarized as follows. That is, the transmission device 10 generates a plurality of pairs of photons, each of which pairs is in a state of quantum entanglement, and transmits respective one photons of the plurality of pairs of photons to the reception devices 20 via the multiplexing device 30. The reception devices 20 each measure a part of a plurality of photons which have been received, and the transmission device 10 measures a part of a plurality of photons and transmits a result of the measurement. In a case where respective results of these measurements correspond to each other, a sequence for encryption key is generated on the basis of a plurality of photons whose measurement result has not been transmitted.

In the above description, an example in which polarization bases are used has been provided. Alternatively, time-bin bases may be used instead of the polarization bases. In such a case, time-bin bases 1-0, 1-1, 2-0, and 2-1 are randomly selected and used for measurement. In a case where a value on the left-hand side is equal between the transmission device 10 and the reception devices 20, a value on the right-hand side is used as a sequence for the key.

Note here that the time-bin bases 1-0 etc. represent the following.

Time-bin basis 1-0: selection of early from two bases {early, late}
Time-bin basis 1-1: selection of late from two bases {early, late}
Time-bin basis 2-0: selection of early+late from two bases {early+late, early-late}
Time-bin basis 2-1: selection of early-late from two bases {early+late, early-late}

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:

(1) A system in accordance with Aspect 1 of the present invention is a system in which quantum entanglement is shared, the system including: a first device (transmission device 10); a plurality of second devices (reception devices 20(1) and 20(2)); a classical communication channel (2(1), 2(2)) that connects the first device with each of the plurality of second devices; a multiplexing device (30) connected to each of the plurality of second devices; and a quantum communication channel (1) that connects the first device and the multiplexing device, wherein the first device outputs, to the quantum communication channel, photons multiplexed by a combination of a degree of freedom of time, a degree of freedom of frequency, and a degree of freedom of space, and the multiplexing device carries out a demultiplexing process by a combination of a degree of freedom of time, a degree of freedom of frequency, and a degree of freedom of space.

According to Aspect 1 of the present invention, multiplexing by a combination of a degree of freedom of time, a degree of freedom of frequency, and a degree of freedom of space makes it possible to efficiently share quantum entanglement.

(2) A system in accordance with Aspect 2 of the present invention is configured such that, in Aspect 1, the first device is a transmission device, and each of the plurality of second devices is a reception device.

According to Aspect 2 of the present invention, multiplexing by a combination of a degree of freedom of time, a degree of freedom of frequency, and a degree of freedom of space makes it possible to carry out efficient communications using quantum entanglement.

(3) A system in accordance with Aspect 3 of the present invention is configured such that, in Aspect 1 or 2, the first device includes a quantum light source (generation section 11) that generates photons in a wavelength-division-multiplexed state.

According to Aspect 3 of the present invention, it is possible to carry out multiplexing with use of the quantum light source which generates photons in a wavelength-division-multiplexed state.

(4) A system in accordance with Aspect 4 of the present invention is configured such that, in Aspect 1 or 2, the first device includes a plurality of quantum light sources (generation sections 11(1) and 11(2)) that are spatially arranged.

According to Aspect 4 of the present invention, it is possible to multiplex photons from the plurality of quantum light sources which are spatially arranged.

(5) A system in accordance with Aspect 5 of the present invention is configured such that, in Aspect 4, the first device includes a multiplexing section (13) that carries out, with respect to respective light from the plurality of quantum light sources, a multiplexing process by a combination of a degree of freedom of time, a degree of freedom of frequency, and a degree of freedom of space.

According to Aspect 5 of the present invention, it is possible to multiplex photons from the plurality of quantum light sources with use of the multiplexing section.

(6) A system in accordance with Aspect 6 of the present invention is configured such that, in Aspect 5, the multiplexing section includes a frequency shifter that causes respective photons from the plurality of quantum light sources to differ from each other in frequency.

According to Aspect 6 of the present invention, it is possible to subject photons from the plurality of quantum light sources to frequency-division multiplexing with use of the frequency shifter.

(7) A system in accordance with Aspect 7 of the present invention is configured such that, in Aspect 5 or 6, the multiplexing section includes a delay device that causes respective photons from the plurality of quantum light sources to pass through the quantum communication channel at respective different times.

According to Aspect 7 of the present invention, it is possible to subject photons from the plurality of quantum light sources to time-division multiplexing with use of the delay device.

(8) A system in accordance with Aspect 8 of the present invention is configured such that, in any one of Aspects 5 to 7, a plurality of the quantum communication channels are provided, each of the plurality of the quantum communication channels connecting the first device with the multiplexing device; and the multiplexing section includes a distributor that distributes respective photons from the plurality of quantum light sources to respective different ones of the plurality of the quantum communication channels.

According to Aspect 8 of the present invention, it is possible to subject photons from the plurality of quantum light sources to space-division multiplexing with use of the plurality of quantum communication channels (e.g., a plurality of optical fibers) and the distributor.

Reference Signs List

1: quantum communication channel
2: classical communication channel
10: transmission device
11: generation section

12, 22: control section
13: multiplexing section
20: reception device
21: detection section
30: multiplexing device
100: multiplexed quantum communication system

**Claims**

1. A system in which quantum entanglement is shared, the system comprising:

   a first device;
   a plurality of second devices;
   a classical communication channel that connects the first device with each of the plurality of second devices;
   a multiplexing device connected to each of the plurality of second devices; and
   a quantum communication channel that connects the first device and the multiplexing device,

   wherein

   the first device outputs, to the quantum communication channel, photons multiplexed by a combination of a degree of freedom of time, a degree of freedom of frequency, and a degree of freedom of space, and
   the multiplexing device carries out a demultiplexing process by a combination of a degree of freedom of time, a degree of freedom of frequency, and a degree of freedom of space.

2. The system as set forth in claim 1, wherein:

   the first device is a transmission device; and
   each of the plurality of second devices is a reception device.

3. The system as set forth in claim 1, wherein the first device includes a quantum light source that generates photons in a wavelength-division-multiplexed state.

4. The system as set forth in claim 1, wherein the first device includes a plurality of quantum light sources that are spatially arranged.

5. The system as set forth in claim 4, wherein the first device includes a multiplexing section that carries out, with respect to respective light from the plurality of quantum light sources, a multiplexing process by a combination of a degree of freedom of time, a degree of freedom of frequency, and a degree of freedom of space.

6. The system as set forth in claim 5, wherein the multiplexing section includes a frequency shifter that causes respective photons from the plurality of quantum light sources to differ from each other in frequency.

7. The system as set forth in claim 5, wherein the multiplexing section includes a delay device that causes respective photons from the plurality of quantum light sources to pass through the quantum communication channel at respective different times.

8. The system as set forth in claim 5, wherein:

   a plurality of the quantum communication channels are provided, each of the plurality of the quantum communication channels connecting the first device with the multiplexing device; and
   the multiplexing section includes a distributor that distributes respective photons from the plurality of quantum light sources to respective different ones of the plurality of the quantum communication channels.

## FIG. 1

## FIG. 2

## FIG. 3

EP 4 529 049 A1

FIG. 4

Frequency

FIG. 5

Time

FIG. 6

Position

FIG. 7

# FIG. 8

## INTERNATIONAL SEARCH REPORT

| | |
|---|---|
| International application No. | |
| | **PCT/JP2023/017848** |

### A. CLASSIFICATION OF SUBJECT MATTER

*H04B 10/70*(2013.01)i; *H04J 14/00*(2006.01)i; *H04L 9/12*(2006.01)i
FI: H04B10/70; H04L9/12; H04J14/00

According to International Patent Classification (IPC) or to both national classification and IPC

### B. FIELDS SEARCHED

Minimum documentation searched (classification system followed by classification symbols)

H04B10/70; H04J14/00; H04L9/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-513622 A (CORNING INC.) 24 May 2018 (2018-05-24) | 1-2, 4-5, 8 |
| | paragraphs [0030], [0077]-[0100], fig. 6, 7 | |
| Y | | 3 |
| A | | 6-7 |
| Y | JP 2006-229608 A (FUJITSU LTD.) 31 August 2006 (2006-08-31) | 3 |
| | paragraphs [0077]-[0079], fig. 2, 9 | |
| A | JP 2018-157405 A (TOSHIBA CORP.) 04 October 2018 (2018-10-04) | 1-8 |
| A | JP 2016-144206 A (TOSHIBA CORP.) 08 August 2016 (2016-08-08) | 1-8 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 June 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/017848**

| Patent document cited in search report | | | Publication date (day/month/year) | Patent family member(s) | | | Publication date (day/month/year) |
|---|---|---|---|---|---|---|---|
| JP | 2018-513622 | A | 24 May 2018 | WO | 2016/204847 | A2 | |
| | | | | paragraphs [0036], [0073]-[0096], fig. 6, 7 | | | |
| | | | | US | 9313180 | B1 | |
| | | | | US | 2017/0163415 | A1 | |
| | | | | KR | 10-2017-0133413 | A | |
| | | | | CN | 107710670 | A | |
| JP | 2006-229608 | A | 31 August 2006 | US | 2006/0210083 | A1 | |
| | | | | paragraphs [0127]-[0138], fig. 2, 9 | | | |
| JP | 2018-157405 | A | 04 October 2018 | US | 2018/0269989 | A1 | |
| JP | 2016-144206 | A | 08 August 2016 | US | 2016/0233964 | A1 | |
| | | | | GB | 2534918 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2018157405 A